# NEW EUROPEAN PATENT SPECIFICATION

(11) **EP 2 129 711 B2**
(45) Date of publication and mention of the opposition decision: **10.07.2019**
(45) Mention of the grant of the patent: 14.12.2011
(21) Application number: 08744553.2
(22) Date of filing: 28.03.2008
(51) Int. Cl.: C08J 9/00, C08J 9/14

(54) **USE OF BLOWING AGENT COMPOSITIONS OF HYDROFLUOROOLEFINS AND HYDROCHLOROFLUOROOLEFINS FOR THERMOPLASTIC FOAMING**
VERWENDUNG VON BLASMITTELZUSAMMENSETZUNGEN AUS HYDROFLUOROLEFINEN UND HYDROCHLORFLUOROLEFINEN ZUM THERMOSPLASTISCHEN VERSCHÄUMEN
UTILISATION DE COMPOSITIONS COMPRENANT DES AGENTS D'EXPANSION D'HYDROFLUOROOLÉFINES ET D'HYDROCHLOROFLUOROOLÉFINES POUR LE MOUSSAGE
DE THERMOPLASTES

(30) Priority: 29.03.2007 US 908762 P
(43) Date of publication of application: 09.12.2009
(73) Proprietor: ARKEMA INC., King of Prussia PA 19406 (US)
(72) Inventor: VAN HORN, Brett, L., King of Prussia, Pennsylvania, PA 19406 (US); ELSHEIKH, Maher, Y., Wayne, PA 19087 (US); CHEN, Benjamin, B., Wayne, PA 19087 (US); BONNET, Philippe, Lower Merion, PA 19085 (US)
(74) Representative: Casalonga
(86) International application number: PCT/US2008/058594
(87) International publication number: WO 2008/121778

(56) References cited:
- WO-A2-2007/002703
- CN-A- 101 028 992
- US-A- 4 085 073
- US-A1- 2006 142 173
- US-A1- 2006 243 945
- US-B1- 6 300 378

## Description

### Summary of Invention

The present invention relates to the use of blowing agent compositions comprising (1) at least one hydrofluoroolefin (HFO) and (2) at least one hydrochlorofluoroolefin (HCFO) in the preparation of foamable thermoplastic compositions. The HFOs of component (1) include, but are not limited to, 3,3,3-trifluoropropene (HFO-1243zf), 1,2,3,3,3-pentafluoropropene (HFO-1225ye), cis- and/or trans- 1,3,3,3-tetrafluoropropene (HFO-1234ze), and 2,3,3,3-tetrafluoropropene (HFO 1234yf), and mixtures thereof. The HCFOs of component (2) are those according to claim 1. The blowing agent compositions are useful in the production of low density insulating foams with improved k-factor.

### Background of Invention

With the continued concern over global climate change there is an increasing need to develop technologies to replace those with high ozone depletion potential (ODP) and high global warming potential (GWP). Though hydrofluorocarbons (HFC), being non-ozone depleting compounds, have been identified as alternative blowing agents to chlorofluorocarbons (CFCs) and hydrochlorofluorocarbons (HCFCS) in the production of thermoplastic foams, they still tend to have significant GWP.

Hydrofluoroolefins, such as HFO-1243zf, (cis/trans)-HFO-1234ze, HFO-1234yf, and (E/Z)-HFO-1225ye, have been identified as potential low GWP blowing agents for the production of thermoplastic foams, including extruded polystyrene foams for thermal insulation.

It was discovered that blowing agent composition comprising at least one hydrofluorolefin with at least one hydrochlorofluoroolefin can permit the production of lower density, closed-cell foam with good k-factor which will be particularly useful for thermal insulating foams. This invention may also permit the production of low density, closed-cell foams with enlarged, controlled cell size.

WO 2004/037913, WO 2007/002703, and US Pat. Publication 2004119047 disclose blowing agents comprising halogenated alkenes of generic formula that would include numerous HFOs and HCFOs, among many other materials including brominated and iodinated compounds. The specific combination of HFOs with HCFOs in blowing agent compositions is not disclosed. Specific examples are shown for blowing agent compositions for foaming polystyrene comprising HFOs, specifically HFO-1234ze and HFO-1234yf, either alone or in combination with an HFC, and blowing agent compositions for PUR foaming comprising HCFO-1233zd. No examples of blowing agents combinations comprising HFOs and HCFOs are disclosed.

GB 950,876 discloses a process for the production of polyurethane foams. It discloses that any suitable halogenated saturated or unsaturated hydrocarbon having a boiling point below 150°C, preferably below 50°C, can be used as the blowing agent. Trichlorofluoroethene, chlorotrifluoroethene, and 1,1-dichloro-2,2-difluoroethene are disclosed in a list of suitable blowing agents along with 3,3,3-trifluoropropene. Hydrochlorofluoropropenes are not specifically disclosed nor are longer chain HCFOs nor other HFOs besides 3,3,3-trifluoropropene. There is no disclosure related to blowing agents for thermoplastic foaming, nor are the benefits of HCFOs in thermoplastic foaming mentioned, nor are the benefits of blowing agent combinations comprising HCFOs and HFOs.

CA 2016328 discloses a process for preparing closed-cell, polyisocyanate foam. Disclosed are organic compound blowing agents including halogenated alkanes and alkenes, where the alkene is propylene, and the halogenated hydrocarbons can be chlorofluorocarbons. Among the many exemplary compounds listed are specific chlorofluoroethylenes containing 1 chlorine and from I to 3 fluorines along with specific pentafluoropropene, tetrafluoropropene, and difluoropropene. Hydrochlorofluoropropenes are not specifically disclosed nor are longer chain HCFOs. There is no disclosure related to blowing agents for thermoplastic foaming, nor are the benefits of HCFOs in thermoplastic foaming mentioned, not are the benefits of blowing agent combinations comprising HCFOs and HFOs.

### Detailed Description of Invention

The present invention relates to the use of blowing agents with negligible ozone-depletion and low GWP comprising (1) at least one hydrofluoroolefin (HFO) and (2) at least one hydrochlorofluoroolefin (HCFO). The present invention discloses the use of a blowing agent composition and foamable resin compositions for the production of foams with decreased density and improved k-factor that can be used as insulating foams. In a preferred embodiment of this invention the HFO in component (1) is 3,3,3-trifluoropropene (HFO-1243zf); (cis and/or trans)-1,3,3,3-tetrafluoropropene (HFO-1234ze), particularly the trans isomer; 2,3,3,3-tetrafluoropropene (HFO-1234yf); (cis and/or trans)-1,2,3,3,3-pentafluoropropene (HFO-1225ye) and mixtures thereof. The HCFO of component (2) is (cis and/or trans)-1-chloro-3,3,3-trifluoropropene (HCFO-1233zd), particularly the trans isomer, 2-chloro-3,3,3-trifluoropropene (HCFO-1233xf), 1,1-dicloro-3,3,3-trifluoropropene, 1,2-dichloro-3,3,3-trifluoropropene, and mixtures thereof.

Another embodiment of this invention are foamable resin compositions containing greater than about 1 parts per hundred (pph) and less than about 100pph of the blowing agent composition with respect to resin, preferably greater than about 2pph and less than about 40pph, more preferably greater than about 3pph and less than about 25pph, and even more preferably greater than about 4 pph and less than about 15 pph of the blowing agent composition with respect to resin.

The process for preparing a foamed thermoplastic product is as follows: Prepare a foamable polymer composition by blending together components comprising foamable polymer composition in any order, Typically, prepare a foamable polymer composition by plasticizing a polymer resin and then blending in components of a blowing agent composition at an initial pressure. A common process of plasticizing a polymer resin is heat plasticization, which involves heating a polymer resin enough to soften it sufficiently to blend in a blowing agent composition. Generally, heat plasticization involves heating a thermoplastic polymer resin near or above its glass transition temperature (Tg), or melt temperature (Tm) for crystalline polymers.

A foamable polymer compositions can contain additional additives such as nucleating agents, cell-controlling agents, dyes, pigments, fillers, antioxidants, extrusion aids, stabilizing agents, antistatic agents, fire retardants, IR attenuating agents and thermally insulating additives. Nucleating agents include, among others, materials such as talc, calcium carbonate, sodium benzoate, and chemical blowing agents such axodicarbonamide or sodium bicarbonate and citric acid. IR attenuating agents and thermally insulating additives can include carbon black, graphite, silicon dioxide, metal flake or powder, among others. Flame retardants can include, among others, brominated materials such as hexabromocyclodecane and polybrominated biphenyl ether.

Foam preparation processes of the present invention include batch, semi-batch, and continuous processes. Batch processes involve preparation of at least one portion of the foamable polymer composition in a storable state and then using that portion of foamble polymer composition at some future point in time to prepare a foam.

A semi-batch process involves preparing at least a portion of a foamable polymer composition and intermittently expanding that foamable polymer composition into a foam all in a single process. For example, U.S. Pat. No. 4,323,528, discloses process for making polyolefin foams via an accumulating extrusion process. The process comprises: 1) mixing a thermoplastic material and a blowing agent composition to form a foamable polymer composition; 2) extruding the foamable polymer composition into a holding zone maintained at a temperature and pressure which does not allow the foamable polymer composition to foam; the holding zone has a die defining an orifice opening into a zone of lower pressure at which the foamable polymer composition foams and an openable gate closing the die orifice; 3) periodically opening the gate while substantially concurrently applying mechanical pressure by means of a movable ram on the foamable polymer composition to eject it from the holding zone through the die orifice into the zone of lower pressure, and 4) allowing the ejected foamable polymer composition to expand to form the foam.

A continuous process involves forming a foamable polymer composition and then expanding that foamable polymer composition in a non-stop manner. For example, prepare a foamable polymer composition in an extruder by heating a polymer resin to form a molten resin, blending into the molten resin a blowing agent composition at an initial pressure to form a foamable polymer composition, and then extruding that foamable polymer composition through a die into a zone at a foaming pressure and allowing the foamable polymer composition to expand into a foam. Desirably, cool the foamable polymer composition after addition of the blowing agent and prior to extruding through the die in order to optimize foam properties. Cool the foamable polymer composition, for example, with heat exchangers.

Foams of the present invention can be of any form imaginable including sheet, plank, rod, tube, beads, or any combination thereof. Included in the present invention are laminate foams that comprise multiple distinguishable longitudinal foam members that are bound to one another.

### EXAMPLES

### EXAMPLES 1 - 8: Solubility and Diffusivity of Gases in Polystyrene

The solubility and diffusivity of gases in polystyrene resin was measured using capillary column inverse gas chromatography (cc-IGC) as described in: Hadj Romdhane, Ilyess (1994) "Polymer-Solvent Diffusion and Equilibrium Parameters by Inverse Gas-Liquid Chromatography" PhD Dissertation, Dept. of Chem. Eng., Penn State University. and Hong SU, Albouy A, Duda JL (1999) "Measurement and Prediction of Blowing Agent Solubility in Polystyrene at Supercritical Conditions" Cell Polym 18(5):301-313.

A 15m long, 0.53mm diameter GC capillary-column was prepared with a 3 micron thick polystyrene internal film coating. The column was installed into a Hewlet Packard 5890 Series II Gas Chromatograph with flame ionizer detector. Elution profiles for gases being tested were analyzed according me method outlined in the reference, using methane as the reference gas. The results give the diffusion coefficient of the gas through the polymer, Dp, and the solubility of the gas in the polymer in terms of the partition coefficient, K, which is the ratio of the concentration of the gas in the polymer phase to the concentration in the vapor phase. As such, the greater the value of K for a particular gas in the resin the greater its solubility in that resin.

Table 1 shows the partition coefficient and diffusivity values for several gases in polystyrene at 140°C. Comparative examples 1 and 2 show the solubility and diffusivity of two well studied blowing agents in polystyrene: HCFC-142b (1-chloro-1,1-difluoroethylene) and HFC-134a (1,1,1,2-tetrafluoroethane). Comparative examples 3 - 6 show the solubility and diffusivity of selected HFOs in polystyrene: HFO-1243zf (3,3,3-trifluoropropene), HFO-1234ze(1,3,3,3-tetrafluoropropene), HFO-1234yf (2,3,3,3-tetrafluoropropene), HFO-1225ye(1,2,3,3,3-pentafluoropropene). Examples 7 and 8 show the solubility and diffusivity of trans HCFO-1233zd (1-chloro-3,3,3,-trifluoropropene) and HCFO-1233xf (2-chloro-3,3,3-trifluoropropene).

The good solubility and favorable diffusivity of the HCFOs in polystyrene indicate that they should be effective coblowing agents and/or processing aids for the production of thermoplastic foams using HFO blowing agents. The solubility of the HCFOs in polystyrene is sufficient to provide useful plasticization of the thermoplastic resin to assist in foaming. As can be seen, HCFO-1233xf has a solubility in polystyrene comparable to that of HCFC-142b.

**TABLE 1: Partition Coefficient and Diffusivity of Gases in Polystyrene at 140°C by Inverse Gas Chromatography**

| Example | Gas | Bp (°C) | Mw (g/mol) | K | D (cm²/s) |
|---|---|---|---|---|---|
| 1 | HCFC-142b | -9.8 | 100.49 | 1.249 | 2.61 E-08 |
| 2 | HFC-134a | -26.1 | 102.02 | 0.397 | 3.40E-08 |
| | | | | | |
| 3 | HFO-1243zf | -22 | 96.05 | 0.544 | 2.95E-08 |
| 4 | HFO-1234ze | -16 | 114.04 | 0.423 | 3.09E-08 |
| 5 | HFO-1225ye | -18 | 132.03 | 0.312 | 2.44E-08 |
| 6 | HFO-1234yf | -28.5 | 114.04 | 0.275 | > 2 E-08 |
| | | | | | |
| 7 | HCFO-1233zd | 20.5 | 130.5 | 2.326 | 1.72E-08 |
| 8 | HCFO-1233xf | 15 | 130.5 | 1.475 | 1.67E-08 |

### EXAMPLES 9-18

Extruded polystyrene foam was produced using a counter-rotating twin screw extruder with internal barrel diameters or 27mm and a barrel length of 40 diameters. The screw design was suitable for foaming applications. The pressure in the extruder barrel was controlled with the gear pump and was set high enough such that the blowing agent dissolved in the extruder. The extruder die for examples 10-18 was an adjustable-lip slot die with a gap width of 6.35mm. For example 1, the die was a 2mm diameter strand die with a 1 mm land length. Two grades of general purpose polystyrene were used for the extrusion trials and fed to the extruder at rates of either 2.27 or 4.54 kg/hr (5 or 10 lb/hr). Blowing agents were pumped into the polystyrene resin melt at a controlled rate using high pressure delivery pumps. In the extruder, the blowing agent is mixed and dissolved in the resin melt to produce an expandable resin composition. The expandable resin composition is cooled to an appropriate foaming temperature and then extruded from the die where the drop in pressure initiates foaming. Talc was used as a nucleating agent and was pre-blended with polystyrene to make a masterbatch of50wt% talc in polystyrene. Beads of this masterbatch were mixed with polystyrene pellets to achieve 0.5 wt% talc in each experiment.

The density, open cell content, and cell size was measured for foam samples collected during each run. Density was measured according to ASTM D792, open cell content was measured using gas pycnometry according to ASTM D285-C, and cell size was measured by averaging the cell diameters from scanning electron microscope (SEM) micrographs of foam sample fracture surfaces. SEM images are also used to observe the cell structure and qualitatively cheek for open cell content.

Table 2 shows data for examples 9 through 14, including the loading of each blowing agent in the formulation, the resin feed rate, melt flow index of the resin, the expandable resin melt temperature, and the density, cell size, and open cell content of the resulting foamed product.

Comparative example 9 is typical for polystyrene foaming with HFC-134a, where the poor solubility and difficulties in processing tend to lead to higher density, foam with smaller size and more open cells.

Comparative examples 10 through 12 show results for foaming with 3,3,3-trirfluoropropene (HFO-1243zf; TFP). At a loading of 8.5wt% TFP the resulting foam had smaller cell size while comparative density to examples 10 and 11.

In examples 13 and 14, blowing agent compositions of TFP (HFO-1243zf) and HCFO-1233zd permitted production of lower density foam than achievable with TFP alone along with a beneficial enlargement in the cell size, where it was possible to produce closed-cell foam product with cell sizes greater than 0.2mm at densities less than 53 kg/m³. These foams would be useful as thermal insulating foams with improved k-factor. The HCFO-1233zd was predominantly the trans-isomer.

Comparative examples 15 and 16 were produced during using HFO-1234yf (2,3,3,3-tetrafluoroethane) as the only blowing agent. At a Loading or 5.7wt% 1234yf, as shown in comparative example 16, the foamed product had very small cell size, macrovoids, blowholes high open cell content, and frequent periods of popping at the die caused by undissolved blowing agent. Increasing the content of 1234yf made these problems worse. For examples 17 and 18, blowing agent compositions of HFO-1234yf and HCFO-1233zd permitted production of lower density foam than was produced using the HFO-1234yf alone. The foamed samples of examples 17 and 18 were of good quality, with few defects and produced without popping at the die.

**Table 2**

| Example | Blowing Agent Loading | | | | Polystyrene Resin | | | Foam Properties | | |
|---|---|---|---|---|---|---|---|---|---|---|
| | 134a (wt%) | TF P (wt%) | 1234yf (wt%) | 1233zd (wt%) | Feed (kg/hr) | MFI (g/10min) | Tₘₑₙ (°C) | Density (kg/m³) | Cell Size (mm) | OCC (%) |
| 9 | 6.4 | - | - | - | 2.27 | 4.0 | 111 | 60.9 | 0.06 | 23 |
| | | | | | | | | | | |
| 10 | - | 6.6 | - | - | 2.27 | 11.0 | 114 | 57.6 | 0.11 | < 5 |
| 11 | - | 7.2 | - | - | 2.27 | 11.0 | 115 | 56.5 | 0.11 | < 5 |
| 12 | - | 8.5 | - | - | 4.54 | 4.0 | 117 | 58.0 | 0.05 | < 5 |
| 13 | - | 4.1 | - | 6.6 | 4.54 | 11.0 | 113 | 44.3 | 0.29 | < 5 |
| 14 | - | 6.5 | - | 3.4 | 4.54 | 11.0 | 113 | 52.5 | 0.35 | < 5 |
| | | | | | | | | | | |
| 15 | - | - | 4.4 | - | 4.54 | 11.0 | 117 | 90.9 | 0.15 | 5 |
| 16 | - | - | 5.7 | - | 4.54 | 11.0 | 115 | 71 6 | 0.06 | 31.4 |
| 17 | - | - | 4.2 | 4.3 | 4.54 | 11.0 | 114 | 55.2 | 0.12 | < 5 |
| 18 | - | - | 4.8 | 5.0 | 4.54 | 11.0 | 113 | 53.5 | 0.08 | < 5 |

## Claims

1. The use of a blowing agent composition for thermoplastic foaming, wherein the composition comprises (1) at least one hydrofluoroolefin and (2) from 2wt% to 90wt% of hydrochlorofluoroolefins selected from 1-chloro-3,3,3-trifluoropropene, 2-chloro-3,3,3-trifluoropropene, 1,1-dichloro-3,3,3-trifluoropropene, 1,2-dichloro-3,3,3-trifluoropropene, or mixtures thereof.

2. The use of claim 1, wherein the composition comprises from 5wt% to 80wt% of hydrochlorofluoroolefins.

3. The use of claim 1, wherein the composition comprises from 10wt% to 70wt% of hydrochlorofluoroolefins.

4. The use of claim 1, wherein the composition comprises from 20wt% to 65wt% of hydrochlorofluoroolefins.

5. The use of claim 1, wherein the composition comprises from 30wt% to 60wt% of hydrochlorofluoroolefins.

6. The use of claim 1, wherein the composition further comprises a hydrofluorocarbon, alkane, carbon dioxide, methyl formate, inert gas, atmospheric gas, alcohol, ether, fluorinated ether, unsaturated fluorinated ether, ketone, fluoroketone, water, and mixtures thereof.

7. The use of claim 1, wherein said hydrofluoroolefin is selected from C3 through C5 fluorinated alkene or mixtures thereof.

8. The use of claim 7 wherein said C3 through C5 fluorinated alkene is selected from trifluoropropene, tetrafluoropropene, pentafluoropropene, or mixtures thereof.

9. The use of claim 8 wherein said trifluoropropene is 3,3,3-trifluoropropene.

10. The use of claim 8 wherein said tetrafluoropropene is selected from cis-1,3,3,3-tetrafluoropropene, trans-1,3,3,3-tetrafluoropropene, 2,3,3,3-tetrafluoropropene, or mixtures thereof.

11. The use of claim 8 where the pentafluoropropene is E-1,2,3,3,3-pentafluoropropene, Z-1,2,3,3,3-pentafluoropropene, and mixtures thereof.

12. The use of claim 1 where said 1-chloro-3,3,3-trifluoropropene comprises greater than 75% of the trans-isomer.

13. The use of claim 6 wherein said hydrofluorocarbon is selected from HFC-32, HFC-161, HFC-152, HFC-152a, HFC-143, HFC-143a, HFC-134, HFC-134a, HFC-125, HFC-245fa, HFC-365mfc, HFC-227ea, or mixtures thereof.

14. The use of claim 13 wherein said hydrofluorocarbon is selected from HFC-134a, HPC-152a, HFC-32, HFC-143a, HFC-245fa, or mixtures thereof.

15. The use of claim 6 wherein said alkane is selected from propane, butane, pentane, or hexane.

16. The use of claim 15 wherein said pentane is selected from n-pentane, cyclopentane, isopentane or mixtures thereof.

17. The use of claim 6 wherein said alcohol is selected from ethanol, isopropanol, butanol, ethyl hexanol, methanol, or mixtures thereof.

18. The use of claim 6 wherein said ether is selected from dimethyl ether, diethyl ether, methylethyl ether, or mixtures thereof.

19. The use of claim 6 wherein said ketone is selected from acetone, methyl ethyl ketone, or mixtures thereof.

20. The use of claim 1 wherein said thermoplastic is selected from polystyrene, polyethylene, polypropylene, or mixtures thereof.

21. A foamable resin composition comprising a thermoplastic resin and a blowing agent composition comprising (1) at least one hydrofluoroolefin and (2) from 2wt% to 90wt% of hydrochlorofluoroolefins selected from 1-chloro-3,3,3-trifluoropropene, 2-chloro-3,3,3-trifluoropropene, 1,1-dichloro-3,3,3-trifluoropropene, 1,2-dichloro-3,3,3-trifluoropropene, or mixtures thereof.

22. The foamable resin composition of claim 21 wherein said thermoplastic resin is selected from polystyrene, polyethylene, polypropylene, or mixtures thereof.

23. The foamable resin composition of claim 21 comprising less than 100pph of said blowing agent with respect to said thermoplastic resin.

24. The foamable resin composition of claim 21 comprising from 1pph to 100pph of said blowing agent with respect to said thermoplastic resin.

25. The foamable resin composition of claim 21 comprising from 2pph to 40pph of said blowing agent with respect to said thermoplastic resin.

26. The foamable resin composition of claim 21 comprising from 3pph to 25pph of said blowing agent with respect to said thermoplastic resin.

27. The foamable resin composition of claim 21 comprising from 4pph to 15pph of said blowing agent with respect to said thermoplastic resin.

28. The use of claim 1, wherein the composition further comprises dyes, pigment, cell-controlling agents, fillers, antioxidants, extrusion aids, stabilizing agents, antistatic agents, fire retardants, IR attenuating agents, thermally insulating additives, plasticizers, viscosity modifiers, impact modifiers, gas barrier resins, carbon black, surfactants, and mixtures thereof.

29. A foamed product produced using a blowing agent composition comprising (1) at least one hydrofluoroolefin and (2) from 2wt% to 90wt% of hydrochlorofluoroolefins selected from 1-chloro-3,3,3-trifluoropropene, 2-chloro-3,3,3-trifluoropropene, 1,1-dichloro-3,3,3-trifluoropropene, 1,2-dichloro-3,3,3-trifluoropropene, or mixtures thereof.

## Patentansprüche

1. Verwendung einer Blähmittelzusammensetzung für die Verschäumung von Thermoplast, wobei die Zusammensetzung (1) mindestens ein Hydrofluorolefin und (2) 2 Gew.-% bis 90 Gew.-% Hydrochlorfluorolefine, ausgewählt unter 1-Chlor-3,3,3-trifluorpropen, 2-Chlor-3,3,3-trifluorpropen, 1,1-Dichlor-3,3,3-trifluorpropen, 1,2-Dichlor-3,3,3-trifluorpropen oder Mischungen davon, umfasst.

2. Verwendung nach Anspruch 1, wobei die Zusammensetzung 5 Gew.-% bis 80 Gew.-% Hydrochlorfluorolefine umfasst.

3. Verwendung nach Anspruch 1, wobei die Zusammensetzung 10 Gew.-% bis 70 Gew.-% Hydrochlorfluorolefine umfasst.

4. Verwendung nach Anspruch 1, wobei die Zusammensetzung 20 Gew.-% bis 65 Gew.-% Hydrochlorfluorolefine umfasst.

5. Verwendung nach Anspruch 1, wobei die Zusammensetzung 30 Gew.-% bis 60 Gew.-% -Hydrochlorfluorolefine umfasst.

6. Verwendung nach Anspruch 1, wobei die Zusammensetzung des Weiteren einen Fluorkohlenwasserstoff, Alkan, Kohlendioxid, Methylformiat, inertes Gas, Atmosphärengas, Alkohol, Ether, fluorierten Ether, ungesättigten fluorierten Ether, Keton, Fluorketon, Wasser und Mischungen davon umfasst.

7. Verwendung nach Anspruch 1, wobei das Hydrofluorolefin unter fluoriertem C3- bis C5-Alken oder Mischungen davon ausgewählt ist.

8. Verwendung nach Anspruch 7, wobei das fluorierte C3- bis C5-Alken unter Trifluorpropen, Tetrafluorpropen, Pentafluorpropen oder Mischungen davon ausgewählt ist.

9. Verwendung nach Anspruch 8, wobei das Trifluorpropen 3,3,3-Trifluorpropen ist.

10. Verwendung nach Anspruch 8, wobei das Tetrafluorpropen unter cis-1,3,3,3-Tetrafluorpropen, trans-1,3,3,3-Tetrafluorpropen, 2,3,3,3-Tetrafluorpropen oder Mischungen davon ausgewählt ist.

11. Verwendung nach Anspruch 8, wobei das Pentafluorpropen E-1,2,3,3,3-Pentafluorpropen, Z-1,2,3,3,3-Pentafluorpropen und Mischungen davon ist.

12. Verwendung nach Anspruch 1, wobei das 1-Chlor-3,3,3-trifluorpropen zu mehr als 75 % aus dem trans-Isomer besteht.

13. Verwendung nach Anspruch 6, wobei der Fluorkohlenwasserstoff unter HFC-32, HFC-161, HFC-152, HFC-152a, HFC-143, HFC-143a, HFC-134, HFC-134a, HFC-125, HFC-245fa, HFC-365mfc, HFC-227ea oder Mischungen davon ausgewählt ist.

14. Verwendung nach Anspruch 13, wobei der Fluorkohlenwasserstoff unter HCF-134a, HFC-152a, HFC-32, HFC-143a, HFC-245fa oder Mischungen davon ausgewählt ist.

15. Verwendung nach Anspruch 6, wobei das Alkan unter Propan, Butan, Pentan oder Hexan ausgewählt ist.

16. Verwendung nach Anspruch 15, wobei das Pentan unter n-Pentan, Cyclopentan, Isopentan oder Mischungen davon ausgewählt ist.

17. Verwendung nach Anspruch 6, wobei der Alkohol unter Ethanol, Isopropanol, Butanol, Ethylhexanol, Methanol oder Mischungen davon ausgewählt ist.

18. Verwendung nach Anspruch 6, wobei der Ether unter Dimethylether, Diethylether, Methylethylether oder Mischungen davon ausgewählt ist.

19. Verwendung nach Anspruch 6, wobei das Keton unter Aceton, Methylethylketon oder Mischungen davon ausgewählt ist.

20. Verwendung nach Anspruch 1, wobei der Thermoplast unter Polystyrol, Polyethylen, Polypropylen oder Mischungen davon ausgewählt ist.

21. Schäumbare Harzzusammensetzung, umfassend ein Thermoplastharz und eine Blähmittelzusammensetzung umfassend (1) mindestens ein Hydrofluorolefin und (2) 2 Gew.-% bis 90 Gew.-% Hydrochlorfluorolefine, ausgewählt unter 1-Chlor-3,3,3-trifluorpropen, 2-Chlor-3,3,3-trifluorpropen, 1,1-Dichlor-3,3,3-trifluorpropen, 1,2-Dichlor-3,3,3-trifluorpropen oder Mischungen davon.

22. Schäumbare Harzzusammensetzung nach Anspruch 21, wobei das Thermoplastharz unter Polystyrol, Polyethylen, Polypropylen oder Mischungen davon ausgewählt ist.

23. Schäumbare Harzzusammensetzung nach Anspruch 21, umfassend weniger als 100 pph des Blähmittels mit Bezug auf das Thermoplastharz.

24. Schäumbare Harzzusammensetzung nach Anspruch 21, umfassend 1 pph bis 100 pph des Blähmittels mit Bezug auf das Thermoplastharz.

25. Schäumbare Harzzusammensetzung nach Anspruch 21, umfassend 2 pph bis 40 pph des Blähmittels mit Bezug auf das Thermoplastharz.

26. Schäumbare Harzzusammensetzung nach Anspruch 21, umfassend 3 pph bis 25 pph des Blähmittels mit Bezug auf das Thermoplastharz.

27. Schäumbare Harzzusammensetzung nach Anspruch 21, umfassend 4 pph bis 15 pph des Blähmittels mit Bezug auf das Thermoplastharz.

28. Verwendung nach Anspruch 1, wobei die Zusammensetzung des Weiteren Farbstoffe, Pigmente, Zellreguliermittel, Füllstoffe, Antioxidationsmittel, Extrusionshilfsmittel, Stabilisiermittel, Antistatikmittel, feuerhemmende Mittel, IR-reduzierende Mittel, wärmeisolierende Zusatzmittel, Weichmacher, Viskositätsmodifiziermittel, Schlagzähmacher, Gasbarriereharze, Ruß, Tenside und Mischungen davon umfasst.

29. Geschäumtes Produkt, das unter Anwendung einer Blähmittelzusammensetzung umfassend (1) mindestens ein Hydrofluorolefin und (2) 2 Gew.-% bis 90 Gew.-% Hydrochlorfluorolefine, ausgewählt unter 1-Chlor-3,3,3-trifluorpropen, 2-Chlor-3,3,3-trifluorpropen, 1,1-Dichlor-3,3,3-trifluorpropen, 1,2-Dichlor-3,3,3-trifluorpropen oder Mischungen davon hergestellt wird.

## Revendications

1. Utilisation d'une composition d'agent gonflant pour le moussage de matière thermoplastique, laquelle composition comprend :
1) au moins une hydrofluorooléfine,
2) et de 2 % en poids à 90 % en poids d'hydrochlorofluorooléfines choisies parmi les 1-chloro-3,3,3-trifluoropropène, 2-chloro-3,3,3-trifluoropropène, 1,1-dichloro-3,3,3 -trifluoropropène, 1,2-dichloro-3,3,3-trifluoropropène, et leurs mélanges.

2. Utilisation conforme à la revendication 1, dans laquelle la composition comprend de 5 % en poids à 80 % en poids d'hydrochlorofluorooléfines.

3. Utilisation conforme à la revendication 1, dans laquelle la composition comprend de 10 % en poids à 70 % en poids d'hydrochlorofluorooléfines.

4. Utilisation conforme à la revendication 1, dans laquelle la composition comprend de 20 % en poids à 65 % en poids d'hydrochlorofluorooléfines.

5. Utilisation conforme à la revendication 1, dans laquelle la composition comprend de 30 % en poids à 60 % en poids d'hydrochlorofluorooléfines.

6. Utilisation conforme à la revendication 1, dans laquelle la composition comprend en outre un hydrofluorocarbone, un alcane, du dioxyde de carbone, du formiate de méthyle, un gaz inerte, un gaz atmosphérique, un alcool, un éther, un éther fluoré, un éther fluoré insaturé, une cétone, une cétone fluorée, de l'eau, ou un mélange de tels composés.

7. Utilisation conforme à la revendication 1, dans laquelle ladite hydrofluorooléfine est choisie parmi les alcènes fluorés en C₃ à C₅ et leurs mélanges.

8. Utilisation conforme à la revendication 7, dans laquelle ledit alcène fluoré en C₃ à C₅ est choisi parmi un trifluoropropène, un tétrafluoropropène, un pentafluoropropène, et les mélanges de tels composés.

9. Utilisation conforme à la revendication 8, dans laquelle ledit trifluoropropène est du 3,3,3-trifluoropropène.

10. Utilisation conforme à la revendication 8, dans laquelle ledit tétrafluoropropène est choisi parmi les cis-1,3,3,3-tétrafluoropropène, trans-1,3,3,3-tétrafluoropropène, 2,3,3,3-tétrafluoropropène, et leurs mélanges.

11. Utilisation conforme à la revendication 8, dans laquelle ledit pentafluoropropène est du E-1,2,3,3,3-pentafluoropropène, du Z-1,2,3,3,3-pentafluoropropène, ou un mélange de ceux-ci.

12. Utilisation conforme à la revendication 1, dans laquelle ledit 1-chloro-3,3,3-trifluoropropène comprend plus de 75 % de l'isomère trans.

13. Utilisation conforme à la revendication 6, dans laquelle ledit hydrocarbure fluoré est choisi parmi les suivants : HFC-32, HFC-161, HFC-152, HFC-152a, HFC-143, HFC-143a, HFC-134, HFC-134a, HFC-125, HFC-245fa, HFC-365mfc, HFC-227ea, et leurs mélanges.

14. Utilisation conforme à la revendication 13, dans laquelle ledit hydrocarbure fluoré est choisi parmi les suivants : HFC-134a, HFC-152a, HFC-32, HFC-143a, HFC-245fa, et leurs mélanges.

15. Utilisation conforme à la revendication 6, dans laquelle ledit alcane est choisi parmi du propane, un butane, un pentane et un hexane.

16. Utilisation conforme à la revendication 15, dans laquelle ledit pentane est choisi parmi les n-pentane, cyclopentane, isopentane, et leurs mélanges.

17. Utilisation conforme à la revendication 6, dans laquelle ledit alcool est choisi parmi les éthanol, isopropanol, butanol, éthyl-hexanol, méthanol, et leurs mélanges.

18. Utilisation conforme à la revendication 6, dans laquelle ledit éther est choisi parmi les diméthyl-éther, diéthyl-éther, méthyl-éthyl-éther, et leurs mélanges.

19. Utilisation conforme à la revendication 6, dans laquelle ladite cétone est choisie parmi l'acétone, la méthyl-éthyl-cétone, et leurs mélanges.

20. Utilisation conforme à la revendication 1, dans laquelle ladite matière thermoplastique est choisie parmi un polystyrène, un polyéthylène, un polypropylène, et les mélanges de telles matières.

21. Composition de résine pouvant former une mousse, comprenant une résine thermoplastique et une composition d'agent gonflant comprenant :
1) au moins une hydrofluorooléfine,
2) et de 2 % en poids à 90 % en poids d'hydrochlorofluorooléfines choisies parmi les 1-chloro-3,3,3-trifluoropropène, 2-chloro-3,3,3-trifluoropropène, 1,1-dichloro-3,3,3-trifluoropropène, 1,2-dichloro-3,3,3-trifluoropropène, et leurs mélanges.

22. Composition de résine pouvant former une mousse, conforme à la revendication 21, dans laquelle ladite résine thermoplastique est choisie parmi un polystyrène, un polyéthylène, un polypropylène, et les mélanges de telles matières.

23. Composition de résine pouvant former une mousse, conforme à la revendication 21, qui comprend moins de 100 ppc dudit agent gonflant par rapport à ladite résine thermoplastique.

24. Composition de résine pouvant former une mousse, conforme à la revendication 21, qui comprend de 1 à 100 ppc dudit agent gonflant par rapport à ladite résine thermoplastique.

25. Composition de résine pouvant former une mousse, conforme à la revendication 21, qui comprend de 2 à 40 ppc dudit agent gonflant par rapport à ladite résine thermoplastique.

26. Composition de résine pouvant former une mousse, conforme à la revendication 21, qui comprend de 3 à 25 ppc dudit agent gonflant par rapport à ladite résine thermoplastique.

27. Composition de résine pouvant former une mousse, conforme à la revendication 21, qui comprend de 4 à 15 ppc dudit agent gonflant par rapport à ladite résine thermoplastique.

28. Utilisation conforme à la revendication 1, dans laquelle la composition comprend en outre des colorants, des pigments, des agents de régulation des alvéoles, des charges, des anti-oxydants, des auxiliaires d'extrusion, des agents stabilisants, des agents antistatiques, des agents ignifugeants, des agents d'atténuation des infra-rouges, des adjuvants d'isolation thermique, des plastifiants, des agents de modification de la viscosité, des agents de modification de la résistance aux chocs, des résines formant barrière aux gaz, un noir de carbone, des tensioactifs, ou des mélanges de tels agents.

29. Produit en mousse, produit au moyen d'une composition d'agent gonflant comprenant :
1) au moins une hydrofluorooléfine,
2) et de 2 % en poids à 90 % en poids d'hydrochlorofluorooléfines choisies parmi les 1-chloro-3,3,3-trifluoropropène, 2-chloro-3,3,3-trifluoropropène, 1,1-dichloro-3,3,3-trifluoropropène, 1,2-dichloro-3,3,3-trifluoropropène, et leurs mélanges.
